# EUROPEAN PATENT SPECIFICATION

(11) **EP 1 828 068 B1**
(45) Date of publication and mention of the grant of the patent: **21.04.2010**
(21) Application number: 05809072.1
(22) Date of filing: 23.11.2005
(51) Int. Cl.: C03C 8/02, H05B 3/26

(54) **HEATING ELEMENT AND METHOD FOR DETECTING TEMPERATURE CHANGES**
HEIZELEMENT UND VERFAHREN ZUR DETEKTION VON TEMPERATURÄNDERUNGEN
ELEMENT CHAUFFANT ET PROCEDE DE DETECTION DE VARIATIONS DE TEMPERATURE

(30) Priority: 23.11.2004 NL 1027571; 11.02.2005 NL 1028258
(43) Date of publication of application: 05.09.2007
(73) Proprietor: Ferro Techniek Holding B.V., 7011 AT Gaanderen (NL)
(72) Inventor: KAASTRA, Simon, NL-7091 HV Dinxperlo (NL)
(74) Representative: Brouwer, Hendrik Rogier
(86) International application number: PCT/NL2005/050051
(87) International publication number: WO 2006/083162

(56) References cited:
- EP-A- 0 080 344
- WO-A-98/35917
- WO-A-02/096155
- US-A- 4 713 530
- US-A- 5 560 851
- US-A- 6 118 102
- US-A1- 2003 146 204
- US-B1- 6 797 925
- DATABASE WPI Section EI, Week 198404 Derwent Publications Ltd., London, GB; Class X25, AN 1984-024107 XP002385136 -& WO 84/00275 A (MATSUSHITA ELEC IND CO LTD) 19 January 1984 (1984-01-19)

## Description

The invention relates to a heating element with a layer generating heat by means of electric current, a surface for heating and a dielectric therebetween, and to a method for detecting a temperature change in the heating element with a view to protection against overheating and regulation of temperature.

Such a heating element is for instance described in Netherlands patent application NL 1014601. Described herein is a heating element, for instance for heating liquid in liquid containers or for heating of heating plates, wherein an electrical resistance is heated by throughfeed of current. In addition to this heat-generating layer, the known heating element is provided with a dielectric which separates the surface for heating from the heat-generating layer, in this case the electrical resistance. The intermediate layer with dielectric properties not only provides a good transmission of the developed heat to the surface for heating, but also functions as protection against overheating. For this purpose the heating element according to NL 1014601 is provided with an ammeter which can detect the leakage current through the dielectric. The leakage current coming from the heating element depends partly on the electrical resistance of the dielectric. Because the electrical resistance of the dielectric, at least in a determined temperature range, in turn depends on the temperature, and this dependence can in principle be determined, the detection of the leakage current through the dielectric provides insight into the temperature thereof. The leakage current which can be detected in simple manner with an ammeter therefore forms a measurement value with which the temperature of the dielectric, and thus of the heating element, can be determined. A protection against overheating can be easily built in by coupling the ammeter to a control for the heating element, provided that when a determined leakage current threshold value is reached the supply of current to the heating element is reduced or even wholly interrupted. If the heating element is unearthed, a simple voltage measurement on the metal part can also be used as a signal for the purpose of switching off the element in good time, so before overheating takes place. By making use of suitable electronics and software in a microprocessor or suitable analogous electronic circuits, the user can be alerted in good time that the heat transfer is being disrupted by for instance limescale on the element, as is the case for instance when boiling or evaporating water. The user can then carry out a cleaning at an appropriate moment, although the appliance does not have to be switched off immediately.

Although the known heating element provides a simple detection of temperature changes and protection against overheating, separate measures must generally be taken to enable proper detection of the leakage current. It is thus necessary occasionally to for instance amplify or, conversely, attenuate the current strength of the leakage current. It has also been found that the leakage current is generally difficult to detect if the heating element is provided with earthing. In that case a galvanically separated transformer system will have to be incorporated in the earth wire, which is time-consuming.

US 2003/146204 discloses a heating element provided with multiple dielectric layers with mutually different properties. The dielectric layers may be applied on different sides of a heat generating layer. The presence of an electrically conductive layer between both dielectric layers is not disclosed.

US 5,560,851 discloses a process for producing a miniaturized heating element, comprising dielectric ceramic sheets from the same material.

Derwent Abstract, Access number 1984-024107 discloses a planar heating element comprising a layer for generating heat, and a laminate of an outer (enamel) layer, a substrate, and an insulating enamel layer. There is no indication that two dielectric layers are present in the heating element with mutually different properties.

The present invention has for its object to provide an improved heating element and method for detecting a temperature change in the heating element, with a view to protecting against overheating and/or regulating the temperature, this while retaining the advantages of the known heating element.

For this purpose the heating element according to the invention has the feature that the dielectric comprises at least a first and a second dielectric layer, between which is situated an electrically conductive layer, wherein at almost the same temperature the electrical resistance of the first dielectric layer is higher than the electrical resistance of the second dielectric layer, and that the first dielectric layer is situated closer to the surface for heating than the second dielectric layer.

Owing to the particular assembly of the dielectric a leakage current flowing in the second dielectric layer will preferably be diverted to the electrically conductive layer, since in such a case the first dielectric layer acts as electrically more insulating layer (relative to the second dielectric layer). A possible detection of this leakage current by an ammeter or voltmeter coupled electrically to the electrically conductive layer or connected thereto in other manner hereby now also becomes possible for very low current strengths or voltages, without separate provisions having to be made for this purpose. This enables a more sensitive temperature measurement with a quicker response time than known heretofore. The regulation furthermore becomes cheaper because it is no longer necessary to incorporate a galvanically separated current transformer in the earth wire. The leakage current is herein preferably measured between the electrically conductive layer embedded between the two dielectric layers and the electrical heating resistance arranged on the second layer. Application of the multilayer dielectric according to the invention further provides additional advantages, which will be further discussed hereinbelow.

In the case the surface for heating is manufactured from a heat-conducting and particularly electrically conductive material, and this is also electrically insulated relative to the earth, the leakage current flowing through the dielectric can also be measured at the surface for heating or at a component electrically connected thereto. It is thus for instance possible to measure the leakage current possibly flowing through the second dielectric layer, which optionally enables a temperature measurement in a range other than that supplied by the first layer. It will be apparent that it is possible in principle for the dielectric to be able to contain a plurality of assemblies of a first and a second dielectric layer with an electrically conductive layer therebetween. Such an embodiment allows a possible leakage current to be diverted and, if desired, measured at different positions along the thickness of the heating element.

According to the invention, the heating element is **characterized in that**, at almost the same temperature, the electrical resistance of the first dielectric layer is higher than the electrical resistance of the second dielectric layer. It has been found that an even more sensitive leakage current measurement is possible due to the further increased electrically insulating action of the first dielectric layer relative to the second dielectric layer. It is advantageous here that the first dielectric layer is situated closer to the surface for heating than the second dielectric layer. In the case of overheating a leakage current will be created from the heat-generating layer in the second dielectric layer which, compared to the first dielectric layer, is situated further from the surface for heating. This leakage current will then be diverted via the intermediate electrically conductive layer and not flow at all, or only partially, through the first dielectric layer. By measuring the leakage current, if desired in combination with a driving of the heating element as already described above, a very sensitive and rapidly responding protection against overheating is obtained in this preferred embodiment. This embodiment has the additional advantage that the protection against overheating gains in reliability and is for instance resistant to improper use. The operation of the protection is thus highly insensitive to whether or not the heating element, and in particular the surface for heating, is earthed.

A further preferred embodiment of the heating element according to the invention is **characterized in that** the layer generating heat by means of electrical current comprises resistance tracks which are formed such that adjacent tracks have a high and a low potential. Such a configuration of resistance tracks is also referred to as a bifilar track.

The electrically conductive layer situated between the first and the second dielectric layer can have many embodiments. It is thus possible to apply a layer which at least partly has the properties which are generally important for sensors, such as materials with a negative temperature coefficient (NTC) and materials with a positive temperature coefficient (PTC) for instance have, and which are characterized by a temperature-dependent change in resistance which is relatively great relative to the change in temperature. The electrical sensor more preferably extends over practically the whole surface of the heating element so that a possibly occurring leakage current can be measured over practically the whole surface of the dielectric, irrespective of the precise position of the leakage current.

A particularly suitable embodiment comprises a sensor material which is suitable for measuring temperatures precisely, such as preferably a material with a positive temperature coefficient (PTC), which material is arranged between the two dielectric layers separately of the layer which measures the leakage current. A possible overheating can then be measured using the one sensor layer, and the temperature by connecting the sensor described here twice and measuring the change in resistance thereof.

The electrically conductive layer can be manufactured from any electrically conductive material known to the skilled person. It is thus possible for instance to apply metal foils for this purpose. It is however advantageous to arrange the electrically conductive layer in the form of an electrically conductive network or grid between the two dielectric layers. Such an embodiment saves weight, limits the total thickness of the heating element and also ensures a good adhesion between the two dielectric layers. This enhances the mechanical integrity of the heating element, in particular also at high temperatures. A particularly suitable material for the electrically conductive layer is selected from the group of efficiently conducting metal oxides. Very suitable is for instance a thick film material with an addition of RuO₂, although silver, palladium, nickel and other metals are also suitable for use as additive in the thick film material for the sensor layer.

The first and second dielectric layers of the heating element according to the invention are preferably arranged as a substantially connected layer on the underlying layer, the underlying layer being the surface for heating in case of the first dielectric layer, and the underlying layer being the first dielectric layer (provided with the electrically conductive layer) in case of the second dielectric layer. The layers being substantially well connected is important for the electrically insulating action of the layers at the temperature relevant for this purpose. If the layers contain porosities and/or if they have interruptions of other nature, it will be easily possible for a leakage current or an electrical breakdown to occur there, which is of course undesirable.

The dielectric layers can be manufactured from any material available to the skilled person. It is thus possible to manufacture one or both dielectric layers from a polymer, although these are less suitable for applications where heating to high temperatures must take place. More suitable materials are mixtures of metal oxides and other inorganic oxides. Particularly suitable are dielectric enamel layers, obtained by fusing a mixture of metal oxides and other inorganic oxides.

If desired, the dielectric can be assembled from a dielectric layer of a polymer and a dielectric layer of enamel. Most preferably however, both dielectric layers are manufactured from enamel. Enamel compositions particularly suitable for this application are marketed under the name Kerdi. The use of an enamel layer as dielectric in the manufacture of, among other products, electrical heating elements is per se known, for instance from NL 1014601. The dielectric herein provides for electrical insulation of the electrical resistance, which generally consists of a metallic track. The manufacture of the dielectric from enamel results here in a mechanically relatively strong dielectric which conducts heat relatively well.

The composition of the enamel for both dielectric layers can be selected within wide limits depending on the desired electrical properties, particularly at temperatures occurring during use. The specific electrical resistance of a common enamel composition is generally high at room temperature, usually higher than 1.5*10¹¹ Ω-cm, but can fall drastically as temperatures increase to for instance a typical value of 1.5.10⁷ Ω-cm at 180-400° Celsius. A (relatively small) leakage current through the dielectric becomes possible at such a resistance. The conductivity of an enamel composition can be readily adjusted by for instance making variations in the alkali metal content and/or by adding conducting or, conversely, electrically insulating additives.

In a particular preferred embodiment the dielectric comprises a first and/or a second dielectric layer of an enamel composition and an electrically conductive layer which is assembled from metals and/or semiconductors and/or other conductive materials such as for instance graphite and so forth. A heating element according to the invention which operates particularly well has the feature that the alkali metal content of the enamel composition of the first dielectric layer is lower than that of the second dielectric layer. The manufacture of each layer of the dielectric from an enamel composition which differs only in the alkali metal content has the additional advantage that an optimal adhesion is achieved between the layers. The difference in coefficient of expansion of the layers is moreover relatively small, so that the mechanical stresses in the material are minimized, which results in an improved durability of the dielectric, and therefore also of the heating element.

In addition to the specific resistance of a dielectric layer already described above, the breakdown voltage of such a layer, preferably an enamel layer, is also important. The breakdown voltage is the level of the electrical potential difference over the dielectric layer at which an electric current (with a much greater current strength than a leakage current) begins to flow through the layer. Breakdown can result in undesirable adverse effect on, and even irreparable disintegration of the dielectric layer and also the whole heating element. In order to guarantee maximum safety in an electrical heating element, the breakdown voltage of the dielectric must be sufficiently high in accordance with regulations of certifying organisations such as KEMA and ISO, preferably at least 1250 V (alternating voltage) relative to the earth. Another group of elements, with strengthened or double insulation, must have a breakdown voltage which is higher than 2750 V AC. For such a group the first layer preferably has at least a breakdown voltage of 1750 V and the second layer at least a breakdown voltage of 1000 V. There is a need for heating elements with strengthened insulation or double insulation in which such a safety level can be realised in simple manner. The heating element according to the invention has the advantage that it provides a double insulation. In a particular preferred embodiment according to the invention the enamel composition of the second layer is particularly chosen such that it has a breakdown voltage of a minimum of 1000 V, and the first layer such that it has a breakdown voltage higher than 1750 V.

By selecting the electrical resistance at a given temperature of the first dielectric layer significantly higher than that of the second dielectric layer, the second dielectric layer will at least partly transmit current at a given moment when the electrical resistance overheats. In such a case the first layer will transmit substantially no current, or in any case less. Due to the presence of the conductive intermediate layer the electrical current will hereby be diverted and optionally transmitted again through the second layer at a position further away to another part of the electrical resistance. In this manner an open circuit is obtained which has not passed through to the first layer, and *a fortiori* not to the surface for heating either, and the consumer. The heating element according to the invention is therefore resistant to high voltage, even if the element continues heating at too high a temperature due to a failure of the electronic regulation or the switching member/relay connected thereto. During this process the electrical resistance track will then burn through (like a melting fuse), and after this process the first dielectric layer ensures that a sufficient dielectric strength always remains relative to the earth or the consumer. The heating element according to the invention is therefore intrinsically safe.

It is noted that the breakdown voltage of a dielectric is determined by a plurality of factors, including among others the layer thickness of the dielectric, the enamel composition and structural defects such as gas inclusions and the like present in the dielectric. A good adhesion of the dielectric layer, in this case the enamel composition on the surface for heating (generally of steel, aluminium and/or a ceramic material), is also important.

A particularly suitable enamel composition for application in a dielectric layer of the heating element, preferably the first dielectric layer, comprises between 0 and 10% by mass of V₂O₅, between 0 and 10% by mass of PbO, between 5 and 13% by mass of B₂O₃, between 33 and 53% by mass of SiO₂, between 5 and 15% by mass of Al₂O₃, between 0-10% by mass of ZrO₂ and between 20 and 30% by mass of CaO. If desired, the preferred composition also comprises between 0 and 10% by mass of Bi₂O₃. Such a composition results in an enamel layer with an improved durability when used in heating elements. The enamel composition can be melted relatively easily and herein has a favourable viscosity, whereby it can be applied easily to different types of surface. The enamel composition adheres particularly well to metals, in particular to steel, more particularly to ferritic chromium steel, and still more particularly to ferritic chromium steel with numbers 444 and/or 436 according to the American AISI norm. The maximum compressive stress of the enamel layer which can be obtained from the enamel composition lies in the range between 200 - 250 MPa for the new composition. For known enamel compositions the maximum compressive stress generally lies in the range of 70 - 170 MPa. The preferred enamel composition furthermore has a high temperature resistance so that prolonged exposure to temperatures up to about 530°C, with peak loads up to 700°C, does not cause problems. A first dielectric layer on the basis of the preferred enamel composition therefore has little risk of breakdown, in other words is less susceptible to degeneration owing to prolonged load at a high voltage than known enamel compositions. The properties of the enamel composition are furthermore such that the chance of crack formation in a dielectric layer manufactured therefrom is reduced in the case of temperature changes. The preferred enamel composition has the additional advantage that dielectric layers with the desired properties can be applied to the surface for heating in small layer thicknesses. This enhances the heat conduction.

A particular preferred embodiment comprises a dielectric in which at least the lithium and/or sodium and/or potassium content of the first and the second dielectric layers differ from each other. It is advantageous herein if the enamel composition of the first dielectric layer is substantially free of lithium and/or sodium ions. In a preferred composition according to the invention the second dielectric layer comprises at least lithium and/or sodium ions.

In a preferred embodiment the enamel composition comprises between 0.1 and 6% by weight of potassium. Owing to the addition of potassium the load-bearing capacity of the adhesion of the enamel composition to a substrate surface, for instance the surface for heating, is less critical. In an assembly of such an enamel composition with a substrate surface there occurs less deformation at increased temperatures, in particular in the case of overheating. This is particularly advantageous when the enamel composition is burnt into a heating element. The compressive stress is reduced but is still high enough to prevent the undesired formation of hair cracks. At percentages of potassium higher than 6% by weight the chance of hair crack formation has however been found to increase. In combination with the absence of other alkali metal ions, in particular lithium and sodium, a low leakage current at increased temperatures also remains ensured.

The surface for heating, on which the dielectric is arranged, can be manufactured from any heat-conducting material. The surface for heating is preferably manufactured substantially from metal, for instance steel and/or aluminium. Particularly advantageous is ferritic chromium steel, preferably with a chromium content of at least 10% by weight.

It is advantageous if the coefficient of expansion of the material from which the surface for heating is manufactured does not differ too much from the coefficient of expansion of the first dielectric layer, for instance no more than 20 to 45%, for instance relative to steel, more preferably no more than 20 to 35%. The coefficient of expansion of the second layer preferably does not differ any more than 0 to 25% relative to that of the first layer. A heating element is thus obtained which has been found to be very well able to withstand temperature changes. Particularly the formation of hair cracks in both the dielectric enamel layers according to the invention has been found to be hereby much less. It has been found that the chance of hair cracks increases again at a difference in coefficient of expansion of lower than 20%. It will be apparent that the coefficient of expansion of an enamel composition can be readily adapted to the coefficient of expansion of the surface for heating by for instance adjusting the alkali metal content. Adjusting the potassium content in the enamel composition is recommended here, since the leakage current is hardly influenced hereby at increased temperature. Conversely, it is also possible to choose another material for the surface for heating.

The invention also relates to a method for detecting a temperature change in a heating element formed by an electrical resistance as according to the above described invention. The method according to the invention comprises of measuring a leakage current generated by the first dielectric layer. In another embodiment a potential on the surface for heating (2) is measured.

In another preferred embodiment of the method a temperature increase is measured, wherein the temperature increase occurs as a result of the build-up of for instance limescale layers due to regular heating of water. The detection of the temperature increase can be carried out according to the invention before the heating has to be switched off to protect it against overheating. The user can now receive a signal that a descaling cycle must for instance take place in the near future. The same advantage of course applies when other physical or mechanical phenomena limit the heat transfer.

In a further embodiment of the method according to the invention the temperature increase is so high that the circuit through the electrical resistance of the heating element is interrupted. This can for instance take place in the case of uncontrolled heating by a failing regulating system, wherein the electrical resistance melts through. The heating element according to the invention has the additional advantage that during use thereof hardly any dangerous voltage can occur on the conductive components of the element once the circuit through the electrical resistance has been broken. The heating element according to the invention therefore has the advantage of having "died" safely. Because the dielectric layers in the heating element are separated by the sensor layer, such an assembly complies with the standards laid down for unearthed heating elements, designated by the skilled person as having "double insulation".

In a further preferred embodiment of the method a resistance measurement of the electrically conductive sensor layer (4) is performed in addition to the measurement of the leakage current. It is advantageous here if between the first and second dielectric layers in the heating element there is arranged a second sensor layer which, in addition to the leakage current intercepting layer already discussed above, also comprises NTC and/or PTC properties. The second sensor layer is suitable for measuring temperatures in accurate manner and is electrically separated from the leakage current intercepting layer. In this embodiment the more accurate temperature measurement by resistance measurement of this sensor layer can be combined with the leakage current measurement, which then serves substantially as overheating protection.

The heating element according to the invention can be applied in many fields. It is thus possible to use the element in a water boiler, wherein an improved (double) electrical protection is provided for the user. The heating element is also particularly suitable for application in steam generators, (dish-)washing machines, humidifiers, milk and other liquid heaters, pipe heating devices for liquids, cooker plates, grill plates and the like.

The present invention will now be further elucidated on the basis of the enamel compositions described hereinbelow and the non-limitative exemplary embodiments shown in the following figures. Herein:
- figure 1 shows a schematic view of the construction of the heating element according to the invention;
- figure 2 shows the progression of the specific resistance of the first and second dielectric layer as a function of the temperature;
- figure 3 shows a cross-section of a heating element according to the invention;
- figure 4 shows the progression of the measured current strength as the temperature increases through dielectric layers of different enamel composition.

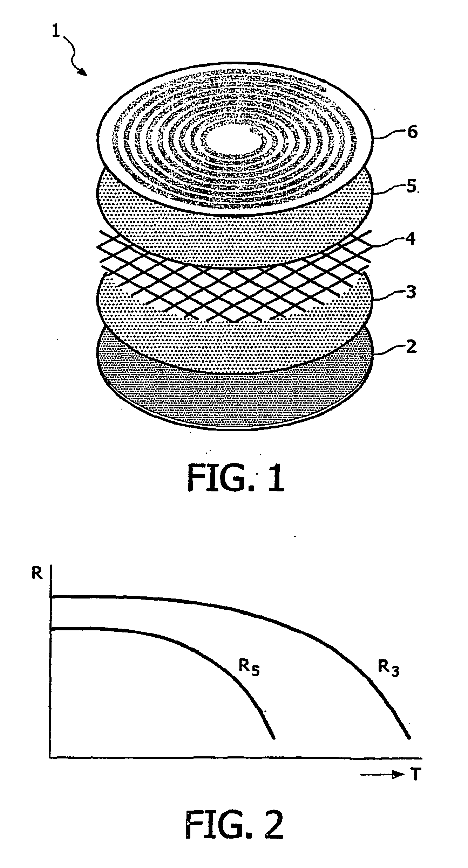

Figure 1 shows a heating element 1 according to the invention, wherein the different stacked layers 2, 3, 4, 5 and 6 are shown separately of each other for the sake of clarity.

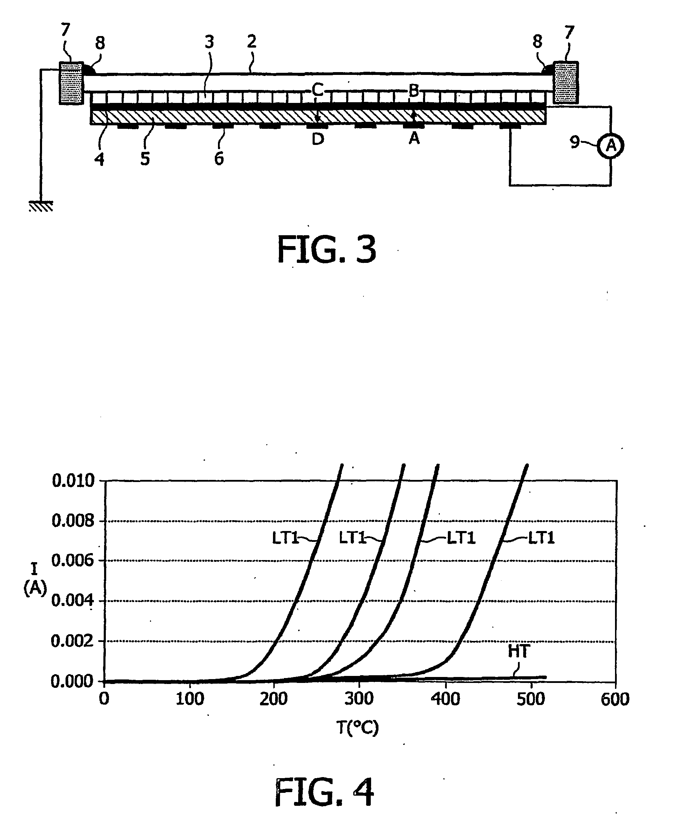

Heating element 1 comprises a heating plate 2 for heating manufactured from ferritic chromium steel with a content of 18% by weight of chromium. It is also possible to apply another suitable metal or ceramic carrier, such as for instance decarbonized steel, copper, titanium, SiN, Al₂O₃ and so forth. A first dielectric enamel layer 3 according to the invention is arranged on heating plate 2. The first enamel layer 3 has an enamel composition substantially as according to column HT of Table 1. An electrically conductive layer in the form of a grid 4 is arranged on the first relatively electrically insulating enamel layer 3. Grid 4 is manufactured from for instance a thick film layer on a basis of ruthenium oxide (RuO₂) or other suitable conductive (thick film) layers with a suitable conductive material, such as for instance the silver, palladium, nickel and so on and/or combinations thereof. A second enamel layer 5 according to the invention is then arranged on the relatively conductive layer 4. The enamel composition of the second enamel layer 5 is chosen within the limits indicated in column LT1 of Table 1. As indicated in figure 2, the LT1 and HT enamel compositions among others ensure that the specific electrical resistance R5 of the second enamel layer 5 decreases at a lower temperature than the specific electrical resistance R3 of the first relatively insulating layer 3. On the second layer 5, which has a better electrical conduction compared to the first layer 3, an electrical heating layer is subsequently arranged in the form of an electrical resistance track 6 which can be used to generate heat. In order to monitor the temperature of heating element 1 during use, the sensor layer 4, which has better conduction compared to both the first layer 3 and the second layer 5, provides the option of determining the leakage current through the second, relatively conductive layer 5. The leakage current can for instance be measured as shown in the embodiment of figure 3. In order to earth heating plate 2 an earth wire can if desired be fixed to element plate 2 which is coupled to the earth. For direct measurement of the leakage current through the first layer 3, an ammeter 9 is connected between the electrical resistance layer 6 and conductive layer 4. The magnitude of the measured leakage current is indicative of the magnitude of the highest temperature at a position on the element 1. When a determined temperature is exceeded, the leakage current will increase sharply due to the reduced resistance of the second dielectric layer 5, so that this can be readily detected by ammeter 9. Because practically no leakage current flows through the first dielectric layer 3, it has been found that the measurement of the leakage current by ammeter 9 becomes much more accurate. Ammeter 9 can optionally be coupled to a control of the power supply to heating resistance 6. Electrical circuits which can be used for measuring the leakage current and regulating the power supply are per se known and described in for instance WO 0 167 818.

The leakage current characteristic measured with the ammeter for a number of dielectric layers is shown in figure 4 as a function of the temperature T. The leakage flow I plotted on the vertical axis remains limited for relatively low temperatures T up to a point close to a determined initiating temperature, above which it suddenly increases rapidly. The initiating temperature greatly depends on the composition of the enamel layer. Figure 4 shows that the composition of the first layer, indicated with HT, has an initiating temperature which amounts to at least 500° C. The other four shown leakage current characteristics (designated with LT1) are representative of enamel compositions of the second layer. By adjusting the composition of the enamel compositions to the desired initiating temperature for the first and/or second dielectric layer, a temperature protection for heating element 1 can be realised using a relatively simple electrical circuit.

Heating element 1 according to the invention can further be used at high power without this detracting from the safety of the heating element. The electrical resistance of the first relatively insulating layer 3 is significantly higher at increased temperatures than the electrical resistance of the second relatively conductive layer 5. At too high a temperature of electrical resistance 6 the resistance of the second layer 5 will at a given moment become significantly lower. This creates an electrical current between the electrical resistance layer 6 and conductive layer 4, indicated in figure 3 as the conductive path AB. Owing to the construction of the dielectric according to the invention, this electrical current will be diverted via the conductive layer 4 without a significant decrease in resistance already occurring in the second dielectric layer 5. With an appropriate design, as a result of the potential reaching layer 4 another current will begin to flow somewhere between heating resistance 6 and layer 4, for instance as indicated in figure 3 by path CD. So much heat will hereby be created in dielectric layer 5 that it fails and, with the short-circuit which then occurs, resistance track 6 will also fail. At that moment the supply current is interrupted (fuse effect) without this forming any danger for the consumer, who in any case only has access to heating plate 2, and which still remains resistant to voltage due to the high electrical resistance of layer 3. The structure of the dielectric (3, 4, 5) according to the invention thus achieves that a possible high voltage on heating resistance 6 does not reach heating plate 2. The heating element according to the invention is therefore resistant to high voltage, this also during and after the overheating which has resulted in permanent failure of an element.

Enamel compositions according to the invention can be obtained by mixing the different raw materials using known rotating melting methods, wherein a glass frit results after cooling. This glass frit can be finely ground to a paste or a sprayable mixture for further applications. The obtained sprayable mixture can for instance be sprayed onto a substrate, such as a steel surface, wherein the enamel layer is formed on the substrate surface by heating. The enamel compositions can likewise be prepared and applied to the layer 2 for heating in other ways known to the skilled person, such as described in for instance Petzold and Pöschmann, "Email und Emailliertechniek" (July 2003).

The enamel compositions according to the invention preferably comprise the compositions as shown in Table 1.

**Table 1: preferred enamel compositions in the heating element according to the invention**

| Enamel composition | LT1 | HT |
|---|---|---|
| Constituent | % by weight | % by weight |
| Li₂O | 0-5 | - |
| K₂O | 0-15 | 0-10 |
| Na₂O | 0-10 | - |
| CaO | 20-40 | 20-40 |
| Al₂O₃ | 5-15 | 5-15 |
| B₂O₃ | 5-13 | 5-13 |
| SiO₂ | 33-53 | 33-53 |
| ZrO₂ | 0-10 | 0-10 |
| PbO | 0-10 | 0-10 |
| V₂O₅ | 0-10 | 0-10 |
| Bi₂O₃ | 0-10 | 0-10 |
| Total | 100 | 100 |

Although the invention has been described on the basis of the above stated examples, it will be apparent that the invention is by no means limited thereto.

## Claims

1. Heating element (1), comprising a layer (6) generating heat by means of electric current, a surface for heating (2) and a dielectric therebetween, **characterized in that** the dielectric comprises at least a first (3) and a second (5) dielectric layer, between which is situated an electrically conductive layer (4), wherein at almost the same temperature the electrical resistance of the first dielectric layer (3) is higher than the electrical resistance of the second dielectric layer (5), and that the first dielectric layer (3) is situated closer to the surface for heating (2) than the second dielectric layer (5)

2. Heating element (1) as claimed in claim 1, **characterized in that** the layer (6) generating heat by means of electrical current comprises resistance tracks which are formed such that adjacent tracks have a high and a low potential.

3. Heating element (1) as claimed in claim 1 or 2, **characterized in that** an ammeter (9) is electrically coupled directly to the conductive intermediate layer (4).

4. Heating element (1) as claimed in any of the foregoing claims, **characterized in that** a voltmeter is electrically coupled directly to the conductive intermediate layer (4).

5. Heating element (1) as claimed in any of the foregoing claims, **characterized in that** the first (3) and/or the second (5) dielectric layers are manufactured from an enamel composition.

6. Heating element (1) as claimed in claim 5, **characterized in that** the alkali metal content of the enamel composition of the first dielectric layer (3)_is lower than that of the second dielectric layer (5).

7. Heating element (1) as claimed in claim 5 or 6, **characterized in that** at least the lithium and/or sodium and/or potassium content of the first (3) and the second (5) dielectric layers differ from each other.

8. Heating element (1) as claimed in any of the claims 5-7, **characterized in that** the first dielectric layer (3) is practically free of lithium and/or sodium ions.

9. Heating element as claimed in any of the claims 5-9, **characterized in that** the alkali metal content of the first (3) and the second (5) dielectric layers differ from each other.

10. Heating element (1) as claimed in any of the claims 5-9, **characterized in that** the enamel composition of the first layer (3) is chosen such that as the temperature rises it has at all times a higher electrical resistance than that of the second layer (5).

11. Heating element (1) as claimed in claim 10, **characterized in that** the enamel compositions of the layers (3, 5) are chosen such that the assembly thereof results in a breakdown voltage higher than 1250 V AC.

12. Heating element (1) as claimed in any of the foregoing claims, **characterized in that** the coefficient of expansion of the material from which the surface for heating (2) is manufactured differs by no more than 20 to 45% from the coefficient of expansion of the first (3) and/or the second (5) dielectric layer.

13. Use of an enamel composition as first dielectric layer (3) in a heating element as claimed in any of the foregoing claims, the enamel composition comprising between 0 and 10% by mass of V2O5, between 0 and 10% by mass of PbO, between 5 and 13% by mass of B2O3, between 33 and 53% by mass of Si02, between 5 and 15% by mass of Al2O3 and between 20 and 30% by mass of CaO.

14. Liquid container, provided with a heating element (1) as claimed in any of the claims 1-12.

15. Method for detecting a temperature change in a heating element (1) formed by an electrical resistance as claimed in any of the claims 1-12, comprising of measuring a leakage current generated by the first dielectric layer (3) and/or measuring a potential on the electrically conductive layer (4).

16. Method as claimed in claim 15, wherein a temperature increase is measured.

17. Method as claimed in claim 16, wherein the temperature increase is so high that the circuit through the electrical resistance of the heating element (1) is interrupted.

18. Method as claimed in any of the claims 15-17, wherein it comprises a resistance measurement of the electrically conductive sensor layer (4) in addition to the measurement of the leakage current.

19. Method as claimed in claim 18, wherein a sensor layer with NTC (negative temperature coefficient) and/or PTC (positive temperature coefficient) properties is arranged between the first (3) and second (5) dielectric layers in the heating element (1).

## Patentansprüche

1. Heizelement (1), das eine Schicht (6) umfasst, die mittels elektrischem Strom Wärme erzeugt, eine Oberfläche zum Heizen (2) und dazwischen ein Dielektrikum, **dadurch gekennzeichnet, dass** das Dielektrikum mindestens eine erste (3) und eine zweite (5) dielektrische Schicht umfasst, wozwischen sich eine elektrisch leitende Schicht (4) befindet, worin bei beinahe derselben Temperatur der elektrische Widerstand der ersten dielektrischen Schicht (3) höher ist als der elektrische Widerstand der zweiten dielektrischen Schicht (5) und dass die erste dielektrische Schicht (3) dichter an der Heizfläche (2) liegt als die zweite dielektrische Schicht (5).

2. Heizelement (1) nach Anspruch 1, **dadurch gekennzeichnet, dass** die Schicht (6), die durch elektrischen Strom Wärme erzeugt, Widerstandsbahnen umfasst, die auf eine Weise gebildet werden, dass angrenzende Bahnen eine hohe und eine niedrige Spannung haben.

3. Heizelement (1) nach Anspruch 1 oder 2, **dadurch gekennzeichnet, dass** ein Amperemeter (9) elektrisch direkt mit der leitenden Zwischenschicht (4) gekoppelt ist.

4. Heizelement (1) nach einem der vorhergehenden Ansprüche, **dadurch gekennzeichnet, dass** ein Voltmeter direkt mit der leitenden Zwischenschicht (4) elektrisch gekoppelt ist.

5. Heizelement (1) nach einem der vorhergehenden Ansprüche, **dadurch gekennzeichnet, dass** die ersten (3) und/oder zweiten (5) dielektrischen Schichten aus einer Email-Zusammensetzung hergestellt sind.

6. Heizelement (1) nach Anspruch 5, **dadurch gekennzeichnet, dass** der Alkalimetallgehalt der Email-Zusammensetzung der ersten dielektrischen Schicht (3) niedriger ist als derjenige der zweiten dielektrischen Schicht (5).

7. Heizelement (1) nach Anspruch 5 oder 6, **dadurch gekennzeichnet, dass** zumindest der Lithium- und/oder Natrium- und/oder Kaliumgehalt der ersten (3) und der zweiten (5) dielektrischen Schicht sich voneinander unterscheiden.

8. Heizelement (1) nach einem der Ansprüche 5-7, **dadurch gekennzeichnet, dass** die erste dielektrische Schicht (3) praktisch frei von Lithium- und/oder Natriumionen ist.

9. Heizelement nach einem der Ansprüche 5-9, **dadurch gekennzeichnet, dass** der Alkalimetallgehalt der ersten (3) und der zweiten (5) dielektrischen Schicht sich voneinander unterscheiden.

10. Heizelement (1) nach einem der Ansprüche 5-9, **dadurch gekennzeichnet, dass** die Email-Zusammensetzung der ersten Schicht (3) so gewählt ist, dass, wenn die Temperatur ansteigt, sie zu allen Zeiten einen höheren elektrischen Widerstand hat als derjenige der zweiten Schicht (5).

11. Heizelement (1) nach Anspruch 10, **dadurch gekennzeichnet, dass** die Email-Zusammensetzungen der Schichten (3, 5) so gewählt sind, dass ihr Zusammenbau in eine Durchschlagspannung resultiert, die höher als 1250 V Wechselspannung ist.

12. Heizelement (1) nach einem der vorhergehenden Ansprüche, **dadurch gekennzeichnet, dass** der Ausdehnungskoeffizient des Materials, aus dem die Oberfläche zum Heizen (2) hergestellt ist, um nicht mehr als 20 bis 45% von dem Ausdehnungskoeffizient der ersten (3) und/oder der zweiten (5) dielektrischen Schicht abweicht.

13. Die Verwendung einer Email-Zusammensetzung als erste dielektrische Schicht (3) in einem Heizelement nach einem der vorhergehenden Ansprüche, wobei die Email-Zusammensetzung zwischen 0 und 10% Masse an V₂O₅, zwischen 0 und 10% Masse an PbO, zwischen 5 und 13% Masse an Bi₂O₃, zwischen 33 und 53% Masse an SiO₂, zwischen 5 und 15% Masse an Al₂O₃ und zwischen 20 und 30% Masse an CaO umfassen.

14. Ein mit einem Heizelement (1) versehener Flüssigkeitsbehälter nach einem der Ansprüche 1-12.

15. Verfahren zum Feststellen einer Temperaturänderung in einem Heizelement (1), das von einem elektrischen Widerstand gebildet wird, nach einem der Ansprüche 1-12, das die Messung eines Verluststroms umfasst, der von der ersten dielektrischen Schicht (3) erzeugt wird, und/oder Messung einer Spannung an der elektrisch leitenden Schicht (4).

16. Verfahren nach Anspruch 15, worin ein Temperaturanstieg gemessen wird.

17. Verfahren nach Anspruch 16, worin der Temperaturanstieg so hoch ist, dass der Stromkreis durch den elektrischen Widerstand des Heizelements (1) unterbrochen wird.

18. Verfahren nach einem der Ansprüche 15-17, worin es eine Widerstandsmessung der elektrisch leitenden Sensorschicht (4) zusätzlich zu der Messung des Verluststroms umfasst.

19. Verfahren nach Anspruch 18, worin eine Sensorschicht mit NTC (negative temperature coefficient) und/oder PTC (positive temperature coefficient) -Eigenschaften zwischen den ersten (3) und den zweiten (5) dielektrischen Schichten in dem Heizelement (1) angeordnet sind.

## Revendications

1. Elément chauffant (1), comprenant une couche (6) produisant de la chaleur au moyen de courant électrique, une surface de chauffage (2) et un diélectrique entre les deux, **caractérisé en ce que** le diélectrique comprend au moins une première (3) et une seconde (5) couches diélectriques entre lesquelles est située une couche électroconductrice (4), étant entendu qu'à pratiquement la même température, la résistance électrique de la première couche diélectrique (3) est plus grande que la résistance électrique de la seconde couche diélectrique (5) et que la première couche diélectrique (3) est située plus près de la surface de chauffage (2) que la seconde couche diélectrique (5).

2. Elément chauffant (1) selon la revendication 1, **caractérisé en ce que** la couche (6) produisant de la chaleur au moyen de courant électrique comprend des pistes résistives qui sont réalisées de telle sorte que des pistes adjacentes aient un potentiel haut et un potentiel bas.

3. Elément chauffant (1) selon la revendication 1 ou 2, **caractérisé en ce qu'**un ampèremètre (9) est couplé électriquement directement à la couche intermédiaire conductrice (4).

4. Elément chauffant (1) selon l'une quelconque des revendications précédentes, **caractérisé en ce qu'**un voltmètre est couplé électriquement directement à la couche intermédiaire conductrice (4).

5. Elément chauffant (1) selon l'une quelconque des revendications précédentes, **caractérisé en ce que** la première (3) et/ou la seconde (5) couches diélectriques sont faites en une composition d'émail.

6. Elément chauffant (1) selon la revendication 5, **caractérisé en ce que** la teneur en métal alcalin de la composition d'émail de la première couche diélectrique (3) est inférieure à celle de la seconde couche diélectrique (5).

7. Elément chauffant (1) selon la revendication 5 ou 6, **caractérisé en ce qu'**au moins les teneurs en lithium et/ou en sodium et/ou en potassium de la première (3) et de la seconde (5) couches diélectriques diffèrent les unes des autres.

8. Elément chauffant (1) selon l'une quelconque des revendications 5-7, **caractérisé en ce que** la première couche diélectrique (3) est pratiquement exempte d'ions lithium et/ou sodium.

9. Elément chauffant selon l'une quelconque des revendications 5-9, **caractérisé en ce que** les teneurs en métal alcalin de la première (3) et de la seconde (5) couches diélectriques diffèrent l'une de l'autre.

10. Elément chauffant (1) selon l'une quelconque des revendications 5-9, **caractérisé en ce que** la composition d'émail de la première couche (3) est choisie de telle sorte que, lorsque la température monte, elle ait à tout moment une résistance électrique supérieure à celle de la seconde couche (5).

11. Elément chauffant (1) selon la revendication 10, **caractérisé en ce que** les compositions d'émail des couches (3, 5) sont choisies de telle sorte que leur assemblage ait pour résultat une tension de claquage supérieure à 1 250 V c.a.

12. Elément chauffant (1) selon l'une quelconque des revendications précédentes, **caractérisé en ce que** le coefficient de dilatation du matériau dans lequel la surface de chauffage (2) est faite, ne diffère pas de plus de 20 à 45 % du coefficient de dilatation de la première (3) et/ou de la seconde (5) couche diélectrique.

13. Utilisation d'une composition d'émail comme première couche diélectrique (3) dans un élément chauffant selon l'une quelconque des revendications précédentes, la composition d'émail comprenant entre 0 et 10 % en masse de V₂O₅, entre 0 et 10 % en masse de PbO, entre 5 et 13 % en masse de B₂O₃, entre 33 et 53 % en masse de SiO₂, entre 5 et 15 % en masse d'Al₂O₃ et entre 20 et 30 % en masse de CaO.

14. Récipient de liquide, pourvu d'un élément chauffant (1) selon l'une quelconque des revendications 1-12.

15. Procédé pour détecter un changement de température dans un élément chauffant (1) constitué d'une résistance électrique selon l'une quelconque des revendications 1-12, consistant à mesurer un courant de fuite produit par la première couche diélectrique (3) et/ou à mesurer un potentiel sur la couche électroconductrice (4).

16. Procédé selon la revendication 15, dans lequel on mesure une hausse de la température.

17. Procédé selon la revendication 16, dans lequel la hausse de la température est si élevée que le circuit traversant la résistance électrique de l'élément chauffant (1) est interrompu.

18. Procédé selon l'une quelconque des revendications 15-17, dans lequel il comprend une mesure de la résistance de la couche détectrice électroconductrice (4) en plus de la mesure du courant de fuite.

19. Procédé selon la revendication 18, dans lequel une couche détectrice aux propriétés CTN (coefficient de température négatif) et/ou CTP (coefficient de température positif) est agencée entre les première (3) et seconde (5) couches diélectriques de l'élément chauffant (1).
